# EUROPÄISCHE PATENTANMELDUNG

(11) **EP 1 759 920 A1**
(43) Veröffentlichungstag der Anmeldung: **07.03.2007**
(21) Anmeldenummer: 06118324.0
(22) Anmeldetag: 02.08.2006
(51) Int. Cl.: B60Q 1/076

(54) **Vorrichtung zur Bestimmung der Nulllage einer schwenkbaren Scheinwerferanordnung eines Kraftfahrzeugs**

(30) Priorität: 31.08.2005 DE 102005041195
(71) Anmelder: Hella KGaA Hueck & Co., 59552 Lippstadt (DE)
(72) Erfinder: Büttner, Karsten, 59555 Lippstadt (DE); Kirchner, Stefan, 59555, Lippstadt (DE); Plotzitzka, Jörg, 33397 Rietberg (DE); Korff, Detlef, 59555, Lippstadt (DE)

(57) **Zusammenfassung**

Vorrichtung zur Bestimmung der Nulllage einer schwenkbaren Scheinwerferanordnung eines Kraftfahrzeugs.
Schwenkbare Scheinwerfer müssen dauerhaft exakt ausgerichtet sein, damit einerseits Gegenverkehr nicht geblendet wird und andererseits die gewünschte Ausleuchtung gewährleistet ist. Hierfür sind z.B. aufwändige Verfahren und/oder Messgeräte bekannt, um eine Nulllage festzulegen. Ziel der Erfindung ist es, mit einem einfachen Sensor (17) und Steuergerät (10) die genaue Ausrichtung des Scheinwerfers (1) zu gewährleisten. Dies wird dadurch erreicht, dass das Sensorelement (7) ein programmierbarer Hallschalter ist.

## Beschreibung

Die Erfindung betrifft eine Scheinwerferanordnung eines Kraftfahrzeugs gemäß dem Oberbegriff des Anspruchs 1.

Scheinwerfer, die in einer horizontalen Ebene schwenkbar sind, werden in Kraftfahrzeugen z.B. für Kurvenlicht- Funktionen eingesetzt, um eine Kurve einer Fahrbahn, die das Fahrzeug befährt, besser auszuleuchten. Hierfür werden die Scheinwerfer mit Hilfe eines Antriebs entsprechend einem Lenkrad- Einschlag geschwenkt. Bei Geradeausfahrt unter normalen Bedingungen sollen die Scheinwerfer in einer festgelegten Nulllage positioniert sein, damit einerseits die hierfür bestimmte Ausleuchtung richtig eingestellt ist und andererseits der Winkel der Schwenkung reproduzierbar ist. Entsprechendes gilt für Scheinwerfer, die zur Leuchtweitenregulierung in einer senkrechten Ebene schwenkbar sind. Zur Bestimmung der Nulllage sind verschiedene Wege bekannt geworden.

Die DE 102 41 214 A1 ist eine Scheinwerferanordnung für Kraftfahrzeuge mit einer Einrichtung zum horizontalen Schwenken einer Reflektor- beziehungsweise Leuchteinheit bei Kurvenfahrt bekannt. Die Anordnung umfasst eine Sensoranordnung zur Erfassung eines aktuellen Schwenkwinkels der Leuchteinheit, mit der ein magnetisch wirksames Element als Positionsgeber gekoppelt ist. Ein Sensorelement zur Ausgabe eines elektrischen Signals in Abhängigkeit vom aktuellen Schwenkwinkel ist als Hallsensor ausgebildet. Als Anzeige für den aktuellen Schwenkwinkel wird ausgehend von einer Bewegungsrichtung eine entsprechende Schaltflanke (Regelflanke) des Signals des Hallsensors ausgewertet. Das Sensorelement und der Magnet müssen genau in einer bestimmten Position relativ zur Nulllage montiert sein, damit die Schaltflanke entsprechend ausgewertet werden kann.

Um Kosten bei der Herstellung einer Scheinwerfereinheit zu sparen, sollen Sensoren zur Bestimmung eines aktuellen Schwenkwinkels entfallen. Statt dessen wird ausschließlich ein Hallsensor eingesetzt, der als Schalter ausgebildet ist und als Schaltsignal nur eine Nulllage ausgibt; der aktuelle Schwenkwinkel wird dann über eine Schrittzahl eines Schrittmotors bestimmt. Hierbei ist die Kenntnis der genauen Nulllage in einer Steuereinheit besonders wichtig.

Die nicht vorveröffentlichte DE 10 2005 008 708 beschreibt ein Verfahren zur Null- Lagenpositionierung einer horizontal schwenkbaren Scheinwerfereinheit, die relativ zu der Nulllage um einen Winkel nach links und nach rechts schwenkbar ist. Ein Schwenkweg wird mittels Zählung der Schritte eines Schrittmotors bestimmt. Die Bestimmung der Nulllage erfolgt in drei Schritten: Erstens wird festgestellt, ob die Scheinwerfereinheit in einer Ausgangslage bezogen auf die Nulllage nach links oder nach rechts geschwenkt ist. Zweitens wird die Scheinwerfereinheit mit hoher Geschwindigkeit über die Nulllage geschwenkt, wobei festgestellt wird, ob sich die Schwenkposition bezogen auf die Nulllage geändert hat. Wenn letzteres der Fall ist, wird die Schwenkung bis zum Stillstand abgebremst. Drittens wird die Scheinwerfereinheit mit niedriger Geschwindigkeit zurück in Richtung Nulllage geschwenkt, wobei wiederum festgestellt wird, ob sich die Schwenkposition bezogen auf die Nulllage geändert hat. Wenn dies der Fall ist, wird die Schwenkung angehalten. Dieses Verfahren muss mit jedem Einschalten der Zündung wiederholt werden.

Die ebenfalls nicht vorveröffentlichte DE 10 2005 021 043 beschreibt eine Scheinwerferanordnung für ein Kraftfahrzeug mit einem Stellglied zum Schwenken einer Reflektoreinheit um eine senkrechte Achse - also in einer horizontalen Ebene - und mit einem Mittel zum Erfassen eines Schwenkwinkels umfassend einen Positionsgeber und ein Sensorelement. Der Scheinwerferanordnung ist ein Speicher zugeordnet, in dem die Lage des Sensorelements bezogen auf die Lage der Reflektoreinheit beim Schwenkwinkel der Größe 0 - also eine Nulllage - gespeichert ist. Der Speicher ist vorzugsweise einer Steuereinheit oder dem Sensorelement zugeordnet.

Ausgehend von der DE 10 2005 021 043 ist es Aufgabe der Erfindung, eine Scheinwerferanordnung zu schaffen, deren Nulllage besonders einfach und sicher festlegbar ist.

Die Aufgabe ist durch die Merkmale des Anspruchs 1 gelöst. Die Ausbildung des Sensorelements als programmierbarer Hallschalter bewirkt, dass mit dem Zusammenbau der Scheinwerferanordnung die Nullage der Reflektoreinheit einfach als Schaltpunkt des Hallschalters programmiert werden kann. Hierfür wird die Reflektoreinheit nach ihrem Zusammenbau in die Nullage gebracht und die dann herrschende magnetische Flussdichte gemessen. Diese Flussdichte, die bei der Nulllage am Hallschalter anliegt, wird dann als Schaltpunkt auslösend programmiert.

Die Reflektoreinheit kann unabhängig von Antrieb und Steuergerät vormontiert und vertrieben werden. Da die Nulllage durch Programmierung festgelegt ist, ist eine spätere Justierung der Steuerung nicht erforderlich. Hierdurch und wegen der einfachen Signale des Hallschalters kann das Steuergerät vereinfacht werden.

Wenn gemäß Anspruch 2 die Nulllage in dem Hallschalter sowohl im positiven als auch im negativen Bereich einer magnetischen Feldstärke programmierbar ist, sind die Einbautoleranzen des Hallschalters relativ groß.

Ist dagegen gemäß Anspruch 3 die Nulllage nur im positiven oder im negativen Bereich der Feldstärke programmierbar, ist der Hallschalter einfacher und damit preiswerter.

Durch das unveränderliche Festlegen der Nulllage in dem Hallschalter nach dem Programmieren gemäß Anspruch 4 werden Fehler durch zufällige Störungen der programmierten Daten sicher verhindert. Das Schaltsignal erfolgt zuverlässig in der Nullage.

Wenn der Hallschalter gemäß Anspruch 5 als Ausgangssignal allein ein Schaltsignal aufweist, ist die Auswertung des Signals in einer Steuereinheit vereinfacht.

Die Erfindung wird anhand der schematisch dargestellten Zeichnung weiter erläutert. Es zeigen
Figur 1 eine Draufsicht auf eine Scheinwerferanordnung und
Figur 2 den Verlauf der magnetischen Flussdichte beim Schwenken der Scheinwerferanordnung und den Verlauf der Schaltspannung des programmierten Hallschalters.

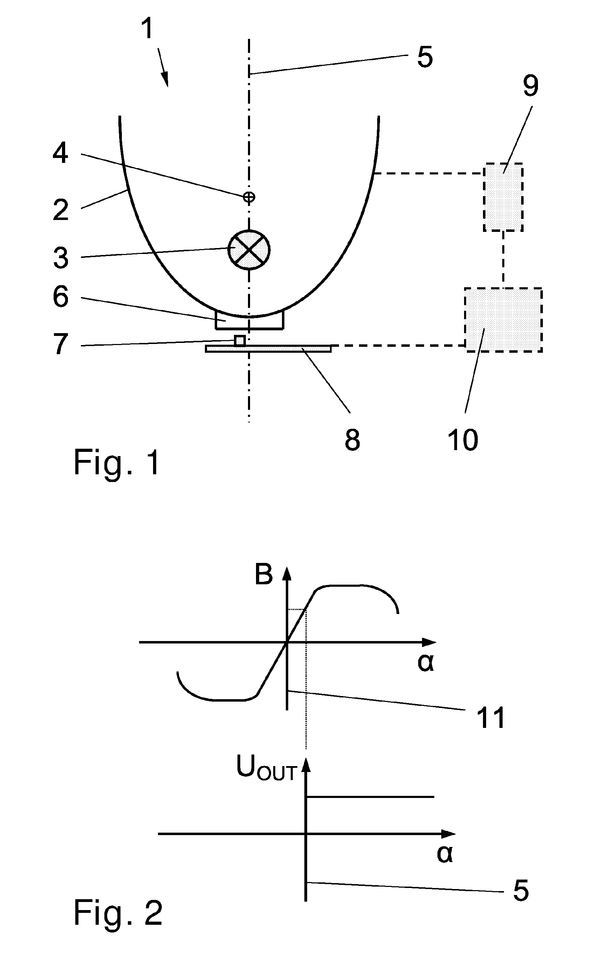

Wie aus Figur 1 ersichtlich umfasst eine Scheinwerferanordnung 1 eine Reflektoreinheit 2. Die Reflektoreinheit 2 umfasst einen in einem nicht dargestellten Drehgestell befestigten Reflektor, das um eine im wesentlichen senkrechte Achse 4 drehbar in einem nicht dargestellten Traggestell und/oder Gehäuse gelagert ist. Auf diese Weise ist die Reflektoreinheit 2 in einer horizontalen Ebene schwenkbar. Bei Geradeausfahrt ohne Zusatzfunktion ist die Reflektoreinheit 2 entsprechend der strichpunktierten Linie in einer Nulllage 5 in dem Traggestell ausgerichtet. Die Nulllage 5 liegt dann in einer senkrechten Ebene durch die optische Achse des Reflektors. Im Brennpunkt des Reflektors ist ein Leuchtmittel 3 angeordnet.

Die Mittel zum Erfassen des Schwenkwinkels umfassen einen Dauermagneten 6 als Positionsgeber und einen programmierbaren Hallschalter 7 als Sensorelement. Der Dauermagnet 6 ist an der Reflektoreinheit 2 so befestigt, dass sein Wechsel von Süd- zu Nordpol in etwa mit der Nulllage 5 zusammenfällt. Der Hallschalter 7 ist mit geringem Abstand zu dem Dauermagneten 6 in der Nähe der Nulllage 5 auf einer Platine 8 angeordnet, wobei die Platine 8 im Traggestell befestigt ist.

Weiterhin sind in Figur 1 ein Schwenkantrieb 9 und ein damit elektrisch verbundenes Steuergerät 10 durch gestrichelte Linien angedeutet. Der Schwenkantrieb 9 umfasst einen Schrittmotor mit Treiberschaltung und ist über z.B. eine Schubstange mit der Reflektoreinheit. 2 verbunden. Das Steuergerät 10 ist mit der Platine 8 elektrisch verbunden. Der Schwenkantrieb 9 und/oder das Steuergerät 10 sind entweder mit der Scheinwerferanordnung 1 zu einem Modul vereint oder werden erst bei einem Einbau in ein Kraftfahrzeug zusammengeführt.

Beim Zusammenbau der Reflektoreinheit 2 wird der Dauermagnet 6 an dem Drehgestell so befestigt, dass der Wechsel vom Südpol zum Nordpol in etwa in der senkrechten Ebene der optischen Achse des Reflektors liegt. Der Hallschalter 7 wird am Traggestell so befestigt, dass er in etwa in der Nulllage 5 und mit geringem Abstand zu dem Dauermagneten 6 positioniert ist. Ein Mess- und Programmiergerät wird an der Platine 8 angeschlossen und die Reflektoreinheit 2 exakt in Nulllage 5 auf dem Traggestell ausgerichtet.

Mittels des Mess- und Programmiergeräts und des Hallschalters 7 wird die bei Nulllage 5 vorherrschende magnetische Flussdichte B gemessen. Wie aus Fig. 2 ersichtlich muss der Nulldurchgang 11 der Flussdichte B nicht mit der tatsächlichen Nulllage 5 übereinstimmen. Der bei der Nulllage 5 gemessene Wert der Flussdichte B wird als Schaltpunkt in dem Hallschalter 7 programmiert und fixiert. Das Fixieren erfolgt z.B. durch Zerstören entsprechender Kondensatoren des Hallschalters 7. Der sogenannte Flankenwechsel des Hallschalters 7 erfolgt jetzt genau in der Nulllage 5. Der Hallschalter 7 gibt dann als Ausgang nur noch ein Schaltsignal, das unter Berücksichtigung der Hysterese für eine Flussdichte B kleiner dem programmierten Wert 0 und für eine Flussdichte B größer oder gleich dem programmierten Wert 1 ist. Die Flussdichte B selbst kann nicht mehr ausgelesen werden.

Das Ausführungsbeispiel ist für z.B. die Funktion Kurvenlicht beschrieben. Die Erfindung ist auch anwendbar für andere Funktionen, in denen die Reflektoreinheit 2 um eine senkrechte Achse geschwenkt wird. Weiterhin kann die Erfindung für eine Schwenkung der Reflektoreinheit 2 um eine horizontale Achse eingesetzt werden.

## Patentansprüche

1. Scheinwerferanordnung für ein Kraftfahrzeug,
mit einer schwenkbar gelagerten Reflektoreinheit (2),
und mit Mitteln zum Erfassen eines Schwenkwinkels umfassend einen Positionsgeber (6) und ein Sensorelement,
wobei das Sensorelement einen Speicher zum Speichern einer Nulllage (5) umfasst,
**dadurch gekennzeichnet, dass** das Sensorelement ein programmierbarer Hallschalter (7) ist.

2. Scheinwerferanordnung nach Anspruch 1, **dadurch gekennzeichnet, dass** die Nulllage (5) in dem Hallschalter (7) sowohl im positiven als auch im negativen Bereich einer magnetischen Feldstärke programmierbar ist.

3. Scheinwerferanordnung nach Anspruch 1, **dadurch gekennzeichnet, dass** die Nulllage (5) in dem Hallschalter (7) entweder im positiven oder im negativen Bereich einer magnetischen Feldstärke programmierbar ist.

4. Scheinwerferanordnung nach einem der Ansprüche 1 bis 3, **dadurch gekennzeichnet, dass** die Nulllage (5) nach dem Programmieren in dem Hallschalter (7) unveränderlich festlegbar ist.

5. Scheinwerferanordnung nach einem der Ansprüche 1 bis 3, **dadurch gekennzeichnet, dass** der Hallschalter (7) als Ausgangssignal allein ein Schaltsignal aufweist.
